Europäisches Patentamt

European Patent Office

Office européen des brevets

(11) Publication number: **0 441 249 A1**

# EUROPEAN PATENT APPLICATION

(21) Application number: 91101327.4

(51) Int. Cl.5: **A63B 49/10, C08G 69/44**

(22) Date of filing: **01.02.91**

(30) Priority: **05.02.90 JP 26775/90**
**30.11.90 JP 338847/90**

(43) Date of publication of application:
**14.08.91 Bulletin 91/33**

(84) Designated Contracting States:
**DE FR GB IT**

(71) Applicant: **TAKEDA CHEMICAL INDUSTRIES, LTD.**
**3-6, Doshomachi 2-chome Chuo-ku**
**Osaka 541(JP)**

Applicant: **MIZUNO CORPORATION**
**1-23, Kitahama 4-chome**
**Chuo-ku, Osaka 541(JP)**

(72) Inventor: **Hayashi, Keijiro**
**17-23, Hiyoshidai 7-bancho**
**Takatsuki, Osaka 569(JP)**
Inventor: **Higuchi, Ryoji, c/o Yoro Plant of**
**Mizuno Corp.**
**3877-8, Takada, Yoro-cho**
**Yoro-gun, Gifu 503-13(JP)**
Inventor: **Sano, Yasuo**
**6-36, Minoo 8-chome**
**Minoo, Osaka 562(JP)**

(74) Representative: **von Kreisler, Alek,**
**Dipl.-Chem. et al**
**Patentanwälte Von Kreisler-Selting-Werner,**
**Deichmannhaus am Hauptbahnhof**
**W-5000 Köln 1(DE)**

(54) **A racket frame and production thereof.**

(57) A racket frame having a crust layer of fiber-reinforced resin which is formed by a resin injection technique employing a continuous fiber for reinforcement and a molding composition capable of providing a cross-linked polyaminoamide resin or cross-linked poly-esteramide resin, is remarkably improved in flexural strength and compressive strength, because it contains a continuous fiber for reinforcement and has a high fiber content of 30 to 80 percent by weight.

Fig. 2

# A RAKET FRAME AND PRODUCTION THEREOF

## FIELD OF THE INVENTION

The present invention relates generally to a racket to be used in ball games such as tennis, squash and badminton. More particularly, the invention relates to a racket frame molded from a fiber-reinforced resin molding composition and a method for manufacturing the same.

## BACKGROUND OF THE INVENTION

The racket frame generally consists of a strung portion, a shaft portion and a grip portion, and the frame constituting these portions is generally uniform in thickness. This means that the resin content of the frame is also constant throughout.

In use of a racket, the respective portions of its frame share in varying proportions of a load.

In the peripheral part of the strung portion, for instance, the groove is subject to a compressive load due to the tension of the gut, while the peripheral part of the head of the racket frame is subjected to a frictional load due to contact with the ground which may occur in hitting the ball. The shaft portion is subjected to a compressive load due to flexure of the racket in striking the ball. Therefore, it is common practice to attach sleeves or eyelets to protect the frame from damage due to the tension of the gut or fit on a protector before use in order to prevent wear of the racket head.

Referring to the prior art racket frame architecture, the large majority of the racket frames heretofore available are manufactured by impregnating a continuous fiber woven fabric, roving or braid with a thermoplastic resin, setting the prepreg in position within a casting mold whose geometry corresponds to the contour of the desired racket frame, and heating it under pressure to cause the resin to cure in situ to provide the desired racket frame.

As the prior art racket frames molded from thermoplastic resins, the specifications of Japanese Patent Publication No. 59-225/1984 and Japanese Patent Application Kokai No. 54-53166/1979 each describes a hollow or solid racket frame injection-molded from a thermoplastic material reinforced with fiber staples at least in the head portion of the racket frame and the specification of Japanese Patent Application Kokai No. 54-16240/1979 discloses a racket frame fabricated by joining injection-molded thermoplastic fiber-reinforced plastic halves each provided with inner ribs.

The prior art racket frames have the following disadvantages.

Referring, first, to the racket frame molded from a continuous fiber-reinforced expoxy or polyester resin, it is true that the frame is sturdy and lightweight but the manufacturing process from preparation of the prepreg to laying-up of the prepreg to setting them in a mold is complicated and time-consuming. Moreover, since the molding cycle is fairly long with a cure time of about 20-40 minutes at about 100-150°C and a hold time of tens of minutes, a large number of molds must be provided for mass production. All of these factors add to the overall manufacturing cost. In addition, the resin by nature is hard but brittle and not as good as desired in shock- and wear resistance.

Furthermore, the occurrence of a multiplicity of surface and internal voids in molding the racket frame calls for deliberate post-processing and leads to failures to meet the designed degree of strength.

The hollow racket frame injection-molded from a staple fiber-reinforced thermoplastic resin is disadvantageous just because the reinforcing fiber is staple fiber, in that it is not as good as the racket frame containing a continuous fiber in strength and rigidity and when the thickness of the frame is increased or the whole frame is made hollow to make up for this disadvantage, it is essential to provide the cavity with reinforcing ribs. This means that a freedom of design, e.g. for weight reduction, is seriously sacrificed. The manufacture of such a racket frame by injection molding involves a high injection pressure so that the mold and other equipment must be sturdy enough to withstand this high pressure and the manufacturing cost is as much increased.

In designing a racket frame with sufficient flexure, it has been common practice to locally vary the amount of the prepreg or vary the exterior dimension of the frame without variation in the amount of the prepreg.

The practice of reducing the amount of the prepreg without modifying the exterior shape or modifying the exterior shape without varying the amount of the prepreg, that is to say, increasing the freedom of flexure by way of reducing the sectional area of the shaft portion of the frame, results in reduced frame strength and, hence, an increased risk of breakage.

## SUMMARY OF THE INVENTION

In view of the above-mentioned disadvantages of the prior art, the present invention was developed to provide a racket frame which is conducive to improved productivity, excellent in durability and broad in the latitude of design and a method for manufacture of such racket frame.

The present invention is thus directed to a racket frame whose crust layer has been molded from a fiber-reinforced resin molding composition and a method for manufacture thereof, both of which are characterized in that said crust layer is molded by a resin injection molding technique using a continuous fiber for reinforcement and a molding composition capable of yielding a cross linked polyaminoamide resin or cross linked polyesteramide resin.

The reinforcing fiber to be used in the present invention includes, inter alia, various inorganic fibers such as glass fiber, carbon fiber, ceramic fiber, boron fiber, tungsten fiber, molybdenum fiber, steel fiber, beryllium fiber, stainless steel fiber, etc. and various synthetic fibers such as polyamide fiber, polyester fiber, polyvinyl alcohol fiber, high-tenacity polyethylene fiber, etc., each in a continuous filament form. These fibers can be used either independently or in combination.

These reinforcing fibers can be used in such optional constructions as woven fabric, roving, mat, bidirectional or tridirectional braid, etc., or in a suitable combination of such constructions.

The proportion of such reinforcing fiber in the racket frame of the present invention can be freely selected according to the viscosity of the molding composition and the kind and configuration of reinforcing fiber. As the rule of thumb, it may range generally from about 30 to 80 percent by weight and preferably from about 40 to 70 percent by weight.

The crosslinked polyaminoamide resin mentioned above includes, inter alia, the cured polyaminoamide resin obtainable by reacting 2,2'-(1,3-phenylene)bis-2-oxazoline (hereinafter referred to as 1,3-PBO) with a diamine compound (e.g. diaminodiphenylmethane, 3,4'-diaminodiphenylether, 4.4'-diaminodiphenylsulfone, 2,2-bis[4-(4-aminophenoxy)phenyl]propane, etc.) with the aid of a catalyst (e.g. an alkyl bromide, an alkyl iodide, an alkyl p-toluenesulfonate, 2-bromopropionic acid or an alkyl ester thereof, etc.) and a cured epoxy-modified polyaminoamide resin which is obtainable by reacting 1,3-PBO and an epoxy resin with a diamine compound with the aid of a catalyst. The crosslinked polyesteramide resin includes, inter alia, a cured polyesteramide resin obtainable by reacting 1,3-PBO with a dibasic acid (e.g. glutaric acid, adipic acid, azelaic acid, sebacic acid, dodecane-2 acid, etc.) in the presence of a catalyst (e.g. phosphorous acid, diphenyl phosphite, triphenyl phosphite, trisnonylphenyl phosphite, etc.).

Incorporated in the molding composition capable of forming such a crosslinked resin are the catalyst, stabilizer, internal mold release, colorant, flame retardant, filler, etc., each chosen to suit the required performance characteristics.

The viscosity of the molding composition capable of forming said crosslinked resin should vary according to the desired fiber content of the racket frame but in order to manufacture a racket frame with a high fiber content of, for example, 30 to 80 percent by weight, a molding composition comparatively low in viscosity, namely not more than 100 cps., and, hence, ready to fill up the inter-fiber clearances is preferably used.

It should be understood that when the viscosity of the molding composition is as low as not more than 100 cps, the composition easily fills up the mold cavity and effectively wets the reinforcing fiber.

Moreover, such a molding composition will not cause "dislodging" of the reinforcing fiber, air cells or other defects in the molding.

The racket frame of the present invention is preferably implemented in a structure in which the distribution of reinforcing fiber in the crust layer is substantially uniform while the thickness of the layer is locally varied. Particularly, it is preferable that the shaft and strung portions of the frame which require added compressive strength be increased in thickness, desirably to about 120-200 percent greater than the remainder of the frame.

One possible way to implement this is to reduce the thickness of the core and increase the amount of resin material without change in the amount of reinforcing fiber in the portion whose thickness is to be increased. When the thickness is increased to the above-mentioned proportion in this manner, sufficient strength can be achieved without adversely affecting the flexibility and weight of the racket frame.

When the racket frame is flexed by hitting the ball, for instance, a compressive force acts on the shaft portion of the frame and if this force overcomes the strength of the shaft, the frame is broken. The compressive strength of the shaft can be remarkably increased by increasing the proportion of the resin which is resistant to compression. However, increasing the amount of the resin in excess of the limit imposed by the above-mentioned thickness range is not recommended, for the performance characteristics of the racket frame will then be adversely affected.

The method for manufacturing the racket frame in accordance with the present invention first comprises providing a core generally conforming to the shape of a finished racket frame and winding a reinforcing fiber round the core, said reinforcing fiber being a continuous fiber or a woven fabric, roving, mat, braid or the like constructed from a continuous fiber, or even a combination thereof.

Then, a separately molded gut protective member is disposed in the position of the preform which corresponds to the gut groove of the racket frame and the whole assembly is set in position within a casting mold provided with projections for gut holes. The atmosphere in the mold is then evacuated and a low-viscosity molding composition capable of forming a crosslinked polyaminoamide or polyesteramide resin is poured into the clearance between the core and the mold so as to cause said composition to cure in situ. By this resin injection technique, an integral racket frame can be manufactured.

The core mentioned above is made of a fusible material or a synthetic resin foam, for instance, and, in geometry, is generally fashioned after a racket frame. In the case of such fusible material, the molded racket frame is heated to a temperature high enough to melt the core but not so high as to deform the cured resin to melt out the core and thereby provide a hollow frame. If necessary, the cavity left behind can be filled up.

The fusible material may for example be an alloy based on bismuth, lead, tin, cadmium or the like which melts at a temperature between 80° to 200° C.

When the core is a synthetic resin foam, a solid racket frame is obtained.

The racket frame of the invention described above has the advantage that because it is molded from a low-viscosity molding composition capable of forming a cross linked polyaminoamide or polyesteramide resin, the proportion of reinforcing fiber can be remarkably increased, to as high as about 30-80 percent by weight, as compared with the conventional epoxy or nylon resin.

The morphology of reinforcing fiber is optional. Thus, a woven fabric, mat, roving, bidirectional or tridirectional braid or the like and, for that matter, any construction that fits the required performance characteristics can be chosen at will.

Furthermore, since the method of the invention employs a low-viscosity molding composition for the formation of said cross linked polyaminoamide or polyesteramide, the molding composition may easily fill up the interfiber spaces even though the fiber is continuous and also find its way into every corner of the mold cavity. Since it does not cause "dislodging" of reinforcing fiber, designing of a frame with an optional distribution of strength is facilitated and the workmanship is also improved.

The above-described racket frame and manufacturing method according to the invention offer the following advantages.

Since the racket frame of the invention contains a continuous fiber for reinforcement and has a high fiber content of 30 - 80 percent by weight, it is remarkably improved in flexural strength and compressive strength. This means, the other way round, that the crust structure of the frame can be reduced in thickness throughout.

Therefore, it is possible to reduce the frame weight and insure a greater freedom of design.

Furthermore, when a separately molded gut protective member is disposed along the gut groove in the head region of the racket frame and molded together with the frame, the use of a sleeve can be dispensed with and if a gut protective member of a color dissimilar to the color of the frame, a greater freedom is obtained in racket design and color scheming.

In the method for manufacturing a racket frame according to the invention, which comprises pouring a low-viscosity liquid molding composition capable of forming a crosslinked polyaminoamide or polyesteramide resin into a casting mold and allowing it to cure in situ, the fiber is effectively "wetted" so that, unlike the injection molding technique using a molten thermoplastic resin, sufficient impregnation of the resin into the fiber matrix can be achieved even when the fiber density is high.

Furthermore, since the molding pressure required is by far lower than it is in the prior art injection molding of a molten thermoplastic resin, the racket frame can be manufactured with an inexpensive mold and the manufacturing cost is as much decreased.

For the same reason that the molding pressure is low, it does not happen that the reinforcing fiber in the mold is "displaced" under the pressure of the poured molding composition. Therefore, the reinforcing fiber can be strategically laid out to suit the required performance characteristics. Moreover, since the local thickness of the racket frame can be freely changed by varying the thickness of the core without varying the amount of reinforcing fiber, improvement in strength can be achieved without interfering with the designed flexibility and weight. The freedom of balancing is also improved and a greater latitude can be insured in overall structural design.

Furthermore, since the molding composition finds its way easily into every corner of the mold cavity, improved moldability by way of the prevention of inadequate fiber wetting and void formation is assured, even when an intricate mold geometry is involved. Moreover, the molding has a satisfactory, attractive surface and does not require deliberate post-processing, so that the manufacturing cost is as much decreased.

Example 1

The preferred example of the invention is described below with reference to the accompanying drawings.

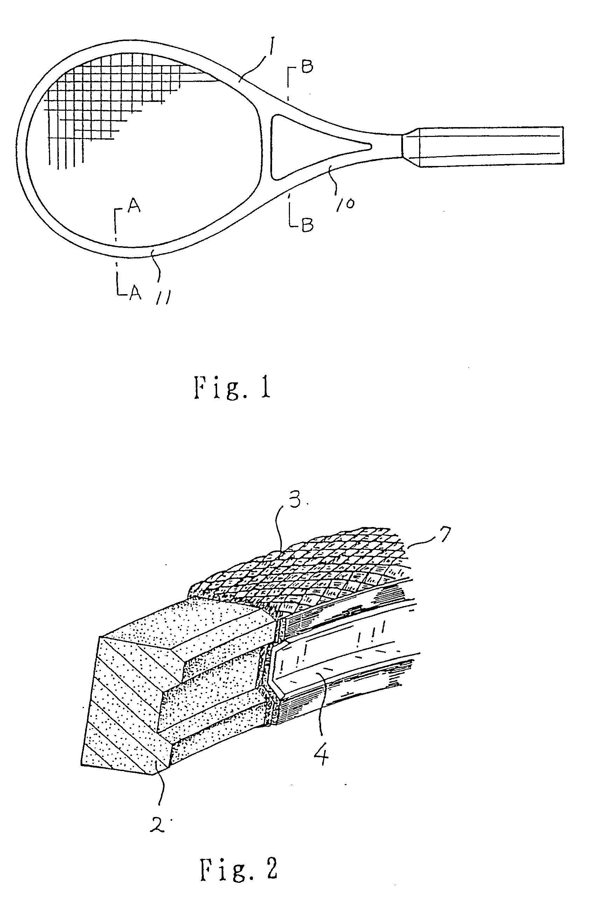

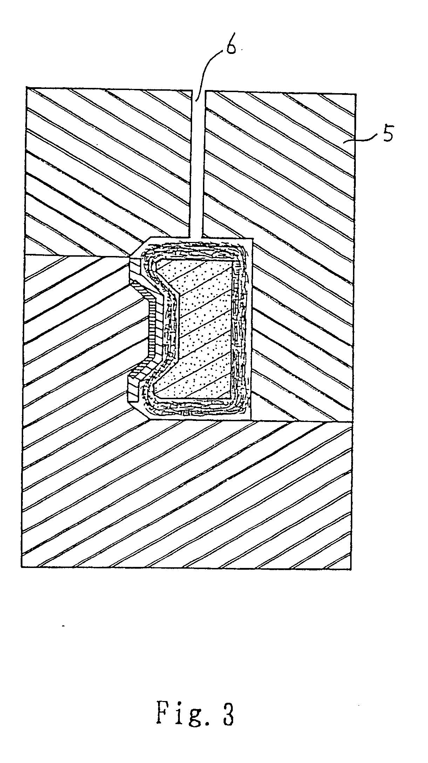

Fig. 1 is an exterior view showing the racket frame 1 of the present invention. Figs. 2 and 3 are elementary views illustrating the method for manufacture of the frame.

A crosslinked polyaminoamide resin was used as the aforesaid crosslinked resin. As reinforcing fiber 3, a continuous glass fiber and a continuous carbon fiber were used in various constructions, namely a braid, mat, roving and woven fabric. The racket frame 1 was molded by casting a molding composition capable of forming said crosslinked resin from a two-liquid pouring device.

First, 1,3-PBO and diaminodiphenylmethane were blended in a ratio of 6:4 by weight and heated to melt at 120°C for use as liquid A. Octyl bromide was used as liquid B. The viscosity of liquid A was about 8 cps (120°C, B-type viscosimeter) and that of liquid B was about 4 cps (25°C, B-type viscosimeter). The pouring device was adjusted so that the blending ratio would be 100 parts of liquid A vs. 0.5-5 parts of liquid B.

On the other hand, a core 2 generally conforming to the shape of a racket was prepared from a fusible material and a sleeve, a mat and a roving were wound round the core 2 a few turns. Then, a reinforcing fabric was locally disposed in the yoke region so that this reinforcing fiber accounted for 50-70 percent by weight. In this arrangement, a preform 7 was manufactured. In the position corresponding to the gut groove, a gut protective member 4 separately manufactured by impregnating a mat of reinforcing fiber with a urethane resin was previously disposed.

The preform 7 obtained in the above manner was then set in position with a mold 5 for manufacture of a racket frame and after the mold was clamped and decompressed, said molding composition was poured from a pouring gate 6 using a two-liquid pouring device and was allowed to react and cure in situ to provide a racket frame 1.

The molding operation is generally carried out at a mold temperature of about 100 - 150°C and a molding pressure of about 3 - 30 kg/cm². The molding time is generally about 3 - 5 minutes. In Table 1, the physical properties of the resulting racket frame are shown in comparison with those of the prior art frame.

## Table 1

| | Example | Comparative Example |
|---|---|---|
| Pulling resistance of gut (kg) | 131 | 100 |
| Compressive strength (kg) | | |
| Longitudinal | 127 | 100 |
| Transverse | 169 | 100 |
| Three-point flexural strength of frame (kg) | 141 | 100 |

Note) The figures represent relative values, with the values for the prior art product being taken as 100.

Comparative product:
A racket frame was prepared by impregnating a epoxy resin into a braid of carbon fiber, winding the resultant material round a core made of a foam sinthetic resin to provide a prepreg, setting said prepreg in position within a mold, and then curing, the fiber content of which is about 50-70% by weight.
Pulling strength of gut:
A wire engaging a couple of gut holes in the racket frame is pulled and the force causing a fracture of the local part of the frame is measured.
Compressive strength of frame:
A load is applied to the racket frame in a longitudinal or transverse direction and the magnitude of the load causing a breakdown of the frame is determined.
Three-point flexure of frame:
A sample is cut out from the strung portion of the racket frame and subjected to a 3-point flexure test.

Example 2

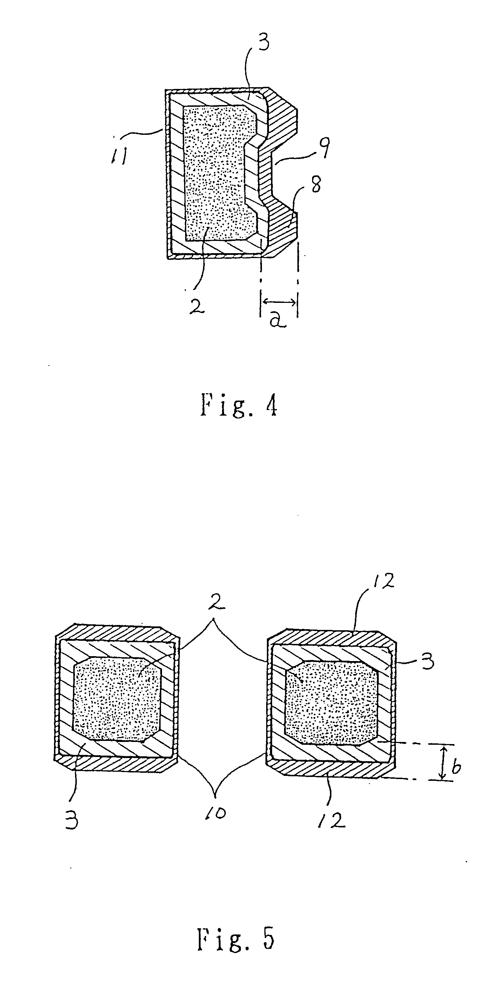

Figs. 4 and 5 each shows an example in which the thickness of the crust layer of the racket frame 1 was locally varied. Fig. 4 is a schematic view showing the application of this principle to the peripheral edge 8 of the strung portion 11 of the racket frame and Fig. 5 is a schematic view showing the variation in thickness as applied to both the face and reverse sides 12 of the shaft portion 10.

In the strung portion, the procedure of Example 1 was repeated except that the thickness of the core 2 was reduced while the fiber content was kept constant so that the thickness a of the peripheral side 8 forming a groove 9 was 120-200% of the thickness of the remainder of the frame.

In the shaft portion 10, the thickness b of face and reverse sides 12 was made 120 - 200% of the thickness of the remainder of the frame by reducing the thickness of the core 2 without varying the amount of reinforcing fiber. Otherwise, the same procedure as Example 1 was followed.

It is the shaft region extending from the lowermost level of the transverse gut to the upper end of the grip portion that is subjected to the greatest compressive and tensile forces due to flexure of the racket frame under the impact of ball hitting. Therefore, improvement in strength was insured by increasing the thickness in the above region.

**Claims**

1. A racket frame having a crust layer of fiber-reinforced resin which is formed by a resin injection technique employing a continuous fiber for reinforcement and a molding composition capable of providing a cross-linked polyaminoamide resin or cross-linked polyesteramide resin.

2. A racket frame as claimed in Claim 1, wherein the molding composition capable of providing a cross-linked polyaminoamide resin or cross-linked polyesteramide resin has a viscosity not over 100 cps.

3. A racket frame as claimed in Claim 1, wherein the proportion of the continuous fiber in the racket frame ranges from about 30 to 80 percent by weight.

4. A racket frame as claimed in Claim 1, wherein the crust layer is formed integrally with an independently molded gut-protective member fitted into a gut-protective groove.

5. A racket frame as claimed in Claim 1, wherein the crust layer is locally varied in thickness without any substantial variation in the amount of said reinforcing fiber within the layer.

6. A racket frame as claimed in Claim 1, wherein the shaft and strung portions of the frame is increased in thickness to about 120-200 percent greater than the remainder of the frame.

7. A method for manufacturing a racket frame which comprises providing a core member generally configured in the shape of a racket, winding a continuous fiber or a reinforcing material based on a continuous fiber round said core member to provide a preform, setting said preform in position within a mold, pouring a low-viscosity molding composition capable of forming a crosslinked polyaminoamide resin or crosslinked polyesteramide resin into the clearance between said core and the mold to allow the molding composition to cure within the mold.

8. A method for manufacturing a racket frame as claimed in Claim 7, the preform is set in position within a mold, a previously molded gut-protective member is set in the position corresponding to said gut groove for integral molding with the preform.

7

Fig. 1

Fig. 2

Fig. 3

Fig. 4

Fig. 5

European
Patent Office

**EUROPEAN SEARCH
REPORT**

Application Number

**EP 91 10 1327**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | GB-A-2 219 240   (DIVERSIFIED PRODUCTS CORP.)<br>* Page 5, lines 11-31 *<br>— — — | 1-4,7,8 | A 63 B 49/10<br>C 08 G 69/44 |
| Y | US-A-4 614 341   (D. FERNANDEZ)<br>* Column 5, lines 19-29 *<br>— — — | 1-4,7,8 | |
| A | US-A-4 868 277   (A.G. CHEN)<br>* Column 3, lines 20,21; column 7, line 28; column 7, lines 49-55 *<br>— — — | 1,7 | |
| A | GB-A-2 015 886   (DUNLOP LTD)<br>* Page 3, lines 64-73 *<br>— — — — — | 1,7 | |
| | | | **TECHNICAL FIELDS SEARCHED (Int. Cl.5)**<br><br>A 63 B<br>C 08 G |

The present search report has been drawn up for all claims

| Place of search | Date of completion of search | Examiner |
|---|---|---|
| The Hague | 18 April 91 | GERARD B.E. |